# EUROPÄISCHE PATENTSCHRIFT

(11) **EP 4 225 526 B1**
(45) Veröffentlichungstag und Bekanntmachung des Hinweises auf die Patenterteilung: **28.05.2025**
(21) Anmeldenummer: 21778448.7
(22) Anmeldetag: 17.09.2021
(51) Int. Cl.: B23K 7/00, B23K 7/10, B23K 9/013, B23K 26/08, B23K 26/38, B23K 37/00, B23K 37/02, B23K 37/04, B23K 101/18

(54) **VERFAHREN UND MASCHINE ZUM SCHNEIDEN UND ENTNEHMEN VON WERKSTÜCKTEILEN AUS EINEM PLATTENFÖRMIGEN MATERIAL**
METHOD AND MACHINE FOR CUTTING AND REMOVING WORKPIECE PARTS FROM A PLANAR MATERIAL
PROCÉDÉ ET MACHINE POUR COUPER ET RETIRER DES PARTIES DE PIÈCES DANS UN MATÉRIAU EN FORME DE PLAQUE

(30) Priorität: 07.10.2020 DE 102020126231
(43) Veröffentlichungstag der Anmeldung: 16.08.2023
(73) Patentinhaber: TRUMPF Werkzeugmaschinen SE + Co. KG, 71254 Ditzingen (DE)
(72) Erfinder: RAICHLE, Florian, 71522 Backnang (DE); WOLF, Dennis, 71296 Heimsheim (DE); WEICK, Florian, 7260 Davos Dorf (CH); MÜLLER, Thomas, 7320 Sargans (CH); BOHY, Mathieu, 6313 Menzingen (CH); WIENS, Jonathan, 23611 Bad Schwartau (DE)
(74) Vertreter: Trumpf Patentabteilung
(86) Internationale Anmeldenummer: PCT/EP2021/075718
(87) Internationale Veröffentlichungsnummer: WO 2022/073748

(56) Entgegenhaltungen:
- EP-A1- 2 441 547
- JP-A- 2015 116 604
- JP-A- H0 699 296
- JP-A- H04 258 393
- JP-A- H10 146 671
- JP-A- H10 315 078

## Beschreibung

Die Erfindung betrifft ein Verfahren und eine Maschine zum Schneiden und Entnehmen von Werkstückteilen aus einem plattenförmigen Material, insbesondere Blechen, siehe Ansprüche 1 und 6.

Aus der WO 2015/17693 A1 sind ein Verfahren und eine Maschine zum Schneiden und Entnehmen von Werkstückteilen aus einem plattenförmigen Material, insbesondere Blechen, bekannt. Diese Maschine umfasst eine Werkstückauflage zur Aufnahme des plattenförmigen Werkstücks. Oberhalb des plattenförmigen Werkstücks ist ein Bearbeitungskopf verfahrbar, durch welchen ein Schneidstrahl zum Schneiden des Werkstückteils aus dem plattenförmigen Werkstück auf das plattenförmige Material gerichtet wird. Nach dem Freischneiden des Werkstückteils als Entnahmeteil aus dem plattenförmigen Werkstück wird dieses Entnahmeteil mittels einer Aushebevorrichtung aus einer durch die Werkstückauflage gebildeten Lagerungsebene senkrecht nach oben ausgehoben. Diese Aushebevorrichtung untergreift das Entnahmeteil mit Aushebestiften. Gegenüberliegend wird das angehobene beziehungsweise ausgehobene Entnahmeteil mit einer Greifvorrichtung aufgenommen und in eine Entladestation ein Magazin oder eine weitere Bearbeitungseinrichtung übergeführt.

Aus der JPH 0699296 A sind ein Verfahren und eine Trennvorrichtung zum Entnehmen von Werkstückteilen aus einem plattenförmigen Material bekannt. Die Trennvorrichtung weist Aushebestifte auf, auf die ein plattenförmiges Material mit ausgeschnittenem Werkstückteil durch eine Greifvorrichtung abgesenkt werden kann. Durch die Aushebestifte wird das Werkstückteil angehoben und beim weiteren Absenken der Greifvorrichtung vom umgebenden Restgitter getrennt.

Aus der WO 2017/202767 A1 sind des Weiteren ein Verfahren und eine Maschine zum Schneiden und Entnehmen von Werkstückteilen aus einem plattenförmigen Material, insbesondere Blechen, bekannt. Diese Maschine umfasst zwei einander zugeordnete Werkstückauflageflächen zur Bildung einer Werkstückauflage. Zwischen den Werkstückauflageflächen ist ein Schneidspalt für einen Schneidstrahl gebildet, der oberhalb des plattenförmigen Werkstücks über einen Bearbeitungskopf auf das plattenförmige Material zu dessen Bearbeitung gerichtet wird. In diesem Schneidspalt sind Unterstützungsschlitten vorgesehen, welche entlang des Schneidspaltes verfahrbar sind. Dadurch können die Lage und/oder Größe der Öffnung eingestellt werden, da die Unterstützungsschlitten unabhängig voneinander innerhalb des Freiraumes zwischen den einander zugeordneten Werkstückauflageflächen verfahrbar sind. Dadurch kann die Größe einer Öffnung zum Eintritt des Schneidstrahls einstellbar sein. Auch kann durch die Unterstützungsschlitten eine Ausschleusöffnung für freigeschnittene Werkstückteile als Entnahmeteile eingestellt werden, um diese Entnahmeteile gegenüber der Werkstückauflage mit einer Ausdrückeinrichtung nach unten auszuschleusen.

Aus der JP 2015-116 604 A (offenbarend den Oberbegriff der Ansprüche 1 und 6) ist des Weiteren ein Verfahren zur Herstellung von Werkstückteilen mit einem Laserschneidstrahl bekannt.

Bei diesem Herstellungsverfahren ist eine Vielzahl von in der Geometrie einfach ausgebildeten Werkstücken unmittelbar aneinandergereiht und rationell geschnitten, indem ein Laserstrahl zunächst entlang einer ersten Raumachse verfahren wird, um eine Stirnseite von mehreren Werkstücken durch eine Verfahrbewegung gleichzeitig herzustellen. Darauffolgend wird eine gegenüberliegende Stirnseite durch eine analoge Verfahrbewegung hergestellt. Im Anschluss daran werden Längsseiten der Werkstücke sowie daran angrenzende Abfallstücke geschnitten.

Aus der EP 2441547 A1 ist ein Verfahren zum Trennen von beim Laserschneiden einer Blechtafel anfallenden Gutteilen aus einem Restgitter der Blechtafel bekannt, wobei die Blechtafel auf einer Werkstückauflage, welche durch mehrere Auflageelemente gebildet ist, aufliegt und die lasergeschnittenen Gutteile über Microjoints noch mit dem Restgitter verbunden sind. Bei dem Verfahren wird nach dem Laserschneiden der Gutteile die Blechtafel durch mindestens einen zumindest teilweise im Restgitter verlaufenden Trennschnitt in kleinere Blechtafelteile zerschnitten. Dabei ist der Trennschnitt derart gestaltet, dass die durch den Trennschnitt voneinander getrennten Blechtafelteile an ihrem trennseitigen Gitterrand auf mindestens einem Auflageelement abgestützt bleiben.

Aus der JPH 10146671 A ist ein Verfahren zum Laserschneiden von Werkstückteilen aus einer Werkstücktafel bekannt, bei dem zum Vermeiden thermischer Deformationen das Schneiden von Randteilen abschnittsweise durchgeführt wird.

Die JPH 10315078 A offenbart ein Verfahren, bei dem zunächst ein Randbereich eines plattenförmigen Werkstücks durch eine Stanzbearbeitung vollständig abgetrennt und entnommen wird. Anschließend werden komplexe Konturlinien an der Außenkante eines zu erzeugenden Werkstückteils oder zwischen zwei benachbarten Werkstückteilen lasergeschnitten, bevor die Werkstückteile entlang von einfachen Konturlinien freigeschnitten werden. Zum Entladen wird ein freigeschnittenes Werkstückteil von einer Greifvorrichtung zur Seite auf ein Förderband gezogen.

In der JPH 04258393 A ist ein Verfahren beschrieben, bei dem ausgehend von der Außenkante eines plattenförmigen Werkstücks abwechselnd Teile des Restgitters und Werkstückteile freigeschnitten und mit einer Entnahmevorrichtung abtransportiert werden, um ein sortiertes Ablegen zu ermöglichen. Zur Vorbereitung dieses Verfahrens werden innerhalb der Werkstückteile oder an der Außenkante der Werkstückteile angeordnete Kleinteile zuerst geschnitten und entfernt.

Die Entnahme von freigeschnittenen Werkstückteilen als Entnahmeteil aus dem plattenförmigen Material kann insbesondere bei größeren Dicken des plattenförmigen Materials und/oder bei Werkstückteilen mit einer komplexen Kontur oder mit einer unsymmetrischen Kontur erschwert sein, da solche Werkstückteile nach dem Freischneiden verkippen oder verkanten und sich mit dem Restgitter verhaken.

Der Erfindung liegt die Aufgabe zugrunde, ein Verfahren und eine Maschine zum Schneiden und Entnehmen von Werkstückteilen aus einem plattenförmigen Werkstück, insbesondere Blechen, vorzuschlagen, bei welchen die Entnahme von freigeschnittenen Werkstückteilen mit einer komplexen Kontur aus dem plattenförmigen Material verbessert und die Prozesssicherheit erhöht wird.

Diese Aufgabe wird durch ein Verfahren zum Schneiden und Entnehmen von Werkstückteilen aus einem plattenförmigen Material entsprechend Anspruch 1 gelöst, bei welchem vor dem Freischneiden des Werkstückteils als Entnahmeteil ein an das Werkstückteil angrenzendes Opferteil geschnitten wird, welches zwischen dem Werkstückteil und dem verbleibenden Restgitter gebildet wird und teilweise einen gemeinsamen Schneidspalt mit dem Werkstückteil und mit dem Restgitter aufweist und wobei das Opferteil aus dem plattenförmigen Material freigeschnitten wird, bevor das Werkstückteil aus dem plattenförmigen Material freigeschnitten wird. Dieses Verfahren weist den Vorteil auf, dass durch das Opferteil ein hinreichender Freiraum in zunächst einem Bereich der komplexen Kontur des Werkstückteils geschaffen wird, um dieses ohne Verkippen oder Verkanten aus dem Restgitter zu entnehmen. Dadurch kann beispielsweise ein Ausschleusen des Entnahmeteils gegenüber der Werkstückauflage nach unten durch die Schwerkraft oder ein Ausdrücken mit Unterstützung eines Ausdrückelementes einer Ausdrückeinrichtung nach unten erleichtert sein, ebenso wie ein Anheben des Entnahmeteils gegenüber dem Restgitter nach oben mittels einer Aushebeeinrichtung. Durch diese Opferteile können auch Bereiche benachbart zum Entnahmeteil freigestellt werden, die benötigt werden, damit das Ausdrückelement der Ausdrückeinrichtung oder Aushebestifte der Aushebeeinrichtung am Werkstückteil angreifen können. Aufgrund der Schaffung eines zusätzlichen Freiraumes zwischen dem Entnahmeteil und dem plattenförmigen Werkstück beziehungsweise des Restgitters, insbesondere im Bereich von komplexen Konturen des Entnahmeteils, kann auch ein Verkanten der Entnahmeteile zum Restgitter verringert oder eliminiert werden, wodurch eine vereinfachte Entnahme und somit eine erhöhte Prozesssicherheit ermöglicht wird.

Unter "Opferteil" wird dabei ein Stück des plattenförmigen Materials verstanden, welches zusätzlich geschnitten wird, um das Werkstückteil zu entnehmen. Das Opferteil stellt Abfall dar, der sich jedoch nicht beim Schneiden von mehreren aufeinanderfolgenden Werkstücken ergibt.

Bevorzugt wird das freigeschnittene Opferteil aus dem plattenförmigen Material entnommen, bevor das angrenzende Werkstückteil freigeschnitten wird. Dadurch bleibt das Werkstückteil zumindest mit einer Stegverbindung oder einem sogenannten Mikrojoint mit dem plattenförmigen Material verbunden, bis die Außenkontur des Opferteils vollständig geschnitten ist und darauffolgend das Opferteil aus dem plattenförmigen Material entnommen wird. Alternativ können das freigeschnittene Opferteil und das freigeschnittene Werkstückteil gemeinsam aus dem plattenförmigen Material entnommen werden. Die Opferteile können durch Ausschleusen nach unten - also durch Fallenlassen - oder durch zumindest einen Ausdrückstift nach unten oder durch zumindest eine Aushebeeinrichtung nach oben aus dem plattenförmigen Material herausgedrückt und entnommen werden.

Gemäß einer erfindungsgemäßen Ausführungsform des Verfahrens ist vorgesehen, dass das zumindest eine Opferteil an eine komplexe Kontur des Werkstückteils angrenzend geschnitten wird. Das Opferteil kann die komplexe Kontur des Werkstückteils zumindest teilweise umgeben. Dabei weisen diese Opferteile eine möglichst einfache und geradlinige Außenkontur auf, welche in einfacher Weise aus dem plattenförmigen Material abgeführt sowie schnell und mit wenig Wärmeeintrag in das Material geschnitten werden können. Diese Opferteile schaffen einen Freiraum zwischen den komplexen Konturen zum plattenförmigen Material, um ein Verkippen oder Verkanten zum plattenförmigen Material zu vermeiden.

Das zumindest eine Opferteil wird dabei angrenzend an der komplexen Kontur des Werkstückteils geschnitten, die als Hinterschneidung, als hakenförmige Kontur oder Eckbereich, als spitzer oder stumpfer Winkel ausgebildet ist.

Gemäß einer weiteren erfindungsgemäßen Ausführungsform des Verfahrens wird das zumindest eine Opferteil so geschnitten, dass nach der Entnahme des Opferteils ein Freiraum im plattenförmigen Material für das Anheben oder Ausdrücken des Entnahmeteils mit einer Aushebeeinrichtung oder einem Ausdrückstift gebildet wird. Dabei muss der Freiraum groß genug sein, um zu ermöglichen, dass die Aushebeeinrichtung oder der Ausdrückstift am Entnahmeteil angreifen kann, ohne in Kontakt mit dem Restgitter zu kommen. Insbesondere bei sehr schmalen oder feinen Konturen, die in einer Raumrichtung kleiner als ein Durchmesser von Aushebestiften oder Ausdrückelementen sind, wird durch ein solches Opferteil ein Freiraum im Restgitter geschaffen, um das Ausdrücken oder Ausheben des Entnahmeteils zu ermöglichen.

Des Weiteren wird bevorzugt das an das Werkstückteil angrenzende oder dieses Werkstückteil zumindest teilweise umgebende Opferteil als ein geradliniger Querschnitt oder eine konvexe Hülle zu der komplexen Kontur ausgebildet. Dadurch kann diese komplexe Kontur von einer einfachen Außenkontur umgeben sein, die einen Teil der Kontur des Opferteils bildet, wobei ein weiterer Teil der Kontur des Opferteils der komplexen Kontur des Werkstückteils entspricht.

Gemäß einer bevorzugten Ausführungsform des Verfahrens wird eine Schnittlinie zwischen dem Opferteil und dem plattenförmigen Material mit einem größeren Schnittspalt geschnitten als die gemeinsame Schnittlinie zwischen dem Opferteil und dem Werkstückteil. Dadurch kann eine Entnahme des Opferteils erleichtert sein. Ein breiterer Schnittspalt kann beispielsweise durch die Verwendung von Sauerstoff statt Stickstoff als Schneidgas, durch einen größeren Fokusdurchmesser des Laserstrahls, durch Defokussierung des Laserstrahls oder eine pendelnde Bewegung des Laserstrahls quer zur Schnittlinie erreicht werden.

Alternativ kann bei einer Schnittlinie zwischen dem Opferteil und dem plattenförmigen Material, die keine gemeinsame Kante mit dem Werkstückteil darstellt, ein Schrägschnitt geschnitten werden, wobei die Ausrichtung des Schneidstrahls zur Werkstückoberfläche derart ist, dass das Abführen des Opferteils aus dem Restgitter nach oben oder nach unten erleichtert wird. Dadurch kann beispielsweise in einer Schnittansicht gesehen das Opferteil eine Seitenkante mit einer senkrecht zur Ebene des plattenförmigen Materials ausgerichteten Schnittkante aufweisen, die zum Werkstückteil weist und eine schräge Schnittkante aufweisen, die zum Restgitter weist. Wenn der auf der Werkstückauflage aufliegende Flächenabschnitt größer als der zum Bearbeitungskopf weisende Flächenabschnitt ist, wird das Herausfallen des Opferteils nach unten erleichtert. Ist der auf der Werkstückauflage aufliegende Flächenabschnitt kleiner als der zum Bearbeitungskopf weisende Flächenabschnitt, so wird ein Ausheben des Opferteils nach oben erleichtert.

Die der Erfindung zugrundliegende Aufgabe wird des Weiteren durch eine Bearbeitungsmaschine entsprechend dem Anspruch 6 gelöst.

Die Erfindung sowie weitere vorteilhafte Ausführungsformen und Weiterbildungen derselben werden im Folgenden anhand der in den Zeichnungen dargestellten Beispiele näher beschrieben und erläutert.

Es zeigen:
- Figur 1: eine perspektivische Ansicht einer Bearbeitungsmaschine zum Schneiden und Entnehmen von Werkstückteilen aus einem plattenförmigen Material,
- Figur 2: eine schematische Ansicht auf in einem Spalt zwischen zwei Werkstückauflageflächen angeordnete Unterstützungsschlitten mit einem darauf aufliegenden Werkstückteil,
- Figur 3: eine schematische Ansicht eines Verfahrensschrittes während einem Ausdrücken eines freigeschnittenen Werkstückteils als Entnahmeteil aus dem plattenförmigen Material,
- Figur 4: eine perspektivische Ansicht auf eine Aushebevorrichtung für eine Bearbeitungsmaschine gemäß Figur 1 zur Entnahme freigeschnittener Werkstückteile aus dem plattenförmigen Material,
- Figur 5: eine schematische Seitenansicht eines Verfahrensschrittes zum Ausheben des freigeschnittenen Werkstückteils nach oben gegenüber einer Werkstückauflage mit der Aushebevorrichtung gemäß Figur 4,
- Figur 6: eine schematische Ansicht auf ein Werkstückteil mit einer komplexen Kontur und Opferteilen,
- Figur 7: eine schematische Schnittansicht entlang der Linie VI-VI in Figur 6,
- Figur 8: eine schematische Schnittansicht einer alternativen Ausführungsform zu Figur 7,
- Figur 9: eine schematische Ansicht auf das Werkstückteil mit einer weiteren komplexen Kontur und einer Ausführungsform des Opferteils, und
- Figur 10: eine schematische Ansicht auf das Werkstückteil mit einer weiteren komplexen Kontur und einer weiteren Ausführungsform des Opferteils.

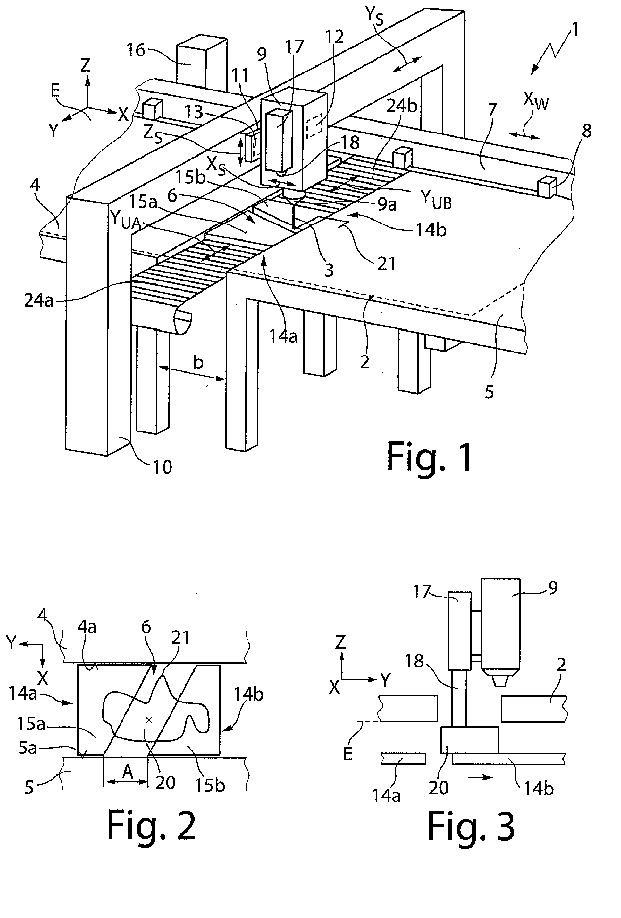

In Figur 1 ist beispielhaft eine Bearbeitungsmaschine 1 zum Schneiden und Trennen von einem strichliniert dargestellten plattenförmigen Material 2 mittels eines Schneidstrahls 3 dargestellt. Bevorzugt handelt es sich um eine Bearbeitungsmaschine zum Laserschneiden, durch welche ein Laserstrahl auf das zu bearbeitende plattenförmige Material 2 gerichtet wird. Alternativ kann der Schneidstrahl 3 auch beispielsweise ein Plasmastrahl oder ein Wasserstrahl sein. Alternativ kann die Bearbeitungsmaschine 1 auch zum mechanischen Trennen des plattenförmigen Materials 2 ausgebildet sein, beispielsweise als Stanzmaschine oder Stanz-Laser-Kombinationsmaschine.

Das plattenförmige Material 2 liegt bei der Bearbeitung auf zwei Werkstückauflageflächen 4, 5 auf, die eine gemeinsame Werkstückauflage für das plattenförmige Material 2 in einer Werkstückauflageebene E (XY-Ebene eines XYZ-Koordinatensystems) bilden. Die Werkstückauflageflächen 4, 5 können durch Tischflächen oder durch stiftförmige Auflageelemente (Pins), Auflagebänder, Bürsten, Rollen, Kugeln, Luftpolster oder dergleichen gebildet sein.

Mittels einer Bewegungs- und Halteeinrichtung 7, welche einen Antrieb sowie Klemmeinrichtungen 8 in Form von Spannpratzen zum Festhalten des plattenförmigen Materials 2 aufweisen, kann das plattenförmige Material 2 auf den Werkstückauflageflächen 4, 5 in einer ersten Richtung X (im Folgenden: X-Richtung) gesteuert verschoben und an eine vorgegebene Werkstückposition positioniert werden.

Zwischen den beiden Werkstückauflageflächen 4, 5 ist ein Spalt 6 gebildet. Der Spalt 6 erstreckt sich in einer zweiten Richtung (im Folgenden: Y-Richtung) über die gesamte Breite der beiden Werkstückauflageflächen 4, 5. Ein Schneidkopf 9, der den Schneidstrahl 3 auf das plattenförmige Material 2 ausrichtet und fokussiert, ist mittels eines als Bewegungseinrichtung dienenden angetriebenen Schlittens 11, der an einem feststehenden Portal 10 geführt ist, in Y-Richtung gesteuert verfahrbar. Der Schneidkopf 9 ist im gezeigten Beispiel zusätzlich auch in X-Richtung verfahrbar und kann mit Hilfe einer am Schlitten 11 angebrachten zusätzlichen Bewegungseinrichtung 12, beispielsweise in Form eines Linearantriebes, in X-Richtung gesteuert verfahren werden.

Mit Hilfe der Bewegungseinrichtungen 11, 12 kann der Schneidkopf 9 sowohl in X-Richtung als auch in Y-Richtung an eine gewünschte Schneidkopfposition X_{S}, Y_{S} innerhalb des Spaltes 6 positioniert werden. Zusätzlich kann der Schneidkopf 9 im gezeigten Beispiel mittels einer dritten Bewegungseinrichtung 13, die auf der zweiten Bewegungseinrichtung 11 aufbaut, entlang einer weiteren Bewegungsrichtung Z (im Folgenden: Z-Richtung) bewegt werden, um den Abstand zwischen einer Bearbeitungsdüse 9a des Laserschneidkopfes 9 und der Oberfläche des plattenförmigen Materials 2 einzustellen beziehungsweise um den Schneidkopf 9 an einer gewünschten Schneidkopfposition Z_{S} in Z-Richtung relativ zur Werkstückauflageebene zu positionieren.

In dem in Figur 1 gezeigten Spalt 6 sind zur zusätzlichen Unterstützung des plattenförmigen Materials 2 und zur zusätzlichen Unterstützung von beim trennenden Bearbeiten geschnittenen Werkstückteilen 20 zwei Unterstützungsschlitten 14a, 14b angeordnet, die in Figur 2 in einer Draufsicht dargestellt sind. Die beiden Unterstützungsschlitten 14a, 14b erstrecken sich jeweils über die gesamte Breite b des Spaltes 6 und sind im Spalt 6 in Y-Richtung gesteuert und unabhängig voneinander verfahrbar. Die gesteuerte Bewegung der Unterstützungsschlitten 14a, 14b zwischen den Seitenkanten 4a, 5a der feststehenden Werkstückauflageflächen 4, 5 kann beispielsweise mit Hilfe von Spindelantrieben erfolgen, und die Spindel sowie der Antriebsmotor können an einer der beiden feststehenden Werkstückauflagen 4, 5 angebracht sein.

Die Unterstützungsschlitten 14a, 14b können im Spalt 6 jeweils an eine gewünschte Position Y_{UA}, Y_{UB} entlang der zweiten Richtung Y bewegt werden, um das plattenförmige Material 2 sowie das dem plattenförmigen Material 2 freizuschneidende beziehungsweise beim Bearbeiten geschnittene Werkstückteil 20 mittels einer am jeweiligen Unterstützungsschlitten 14a, 14b angebrachten Auflagefläche 15a, 15b zu unterstützen (Figur 2). Die Auflageflächen 15a, 15b eines jeweiligen Unterstützungsschlittens 14a, 14b schließen im gezeigten Fall in Z-Richtung bündig mit den Werkstückauflageflächen 4, 5 ab, das heißt, die Auflageflächen 15a, 15b der Unterstützungsschlitten 14a, 14b befinden sich in der Auflageebene E für das plattenförmigen Material 2. Bei dem in Figur 1 gezeigten Beispiel ist an den in X-Richtung verlaufenden, voneinander abgewandten Seitenkanten der Auflageflächen 15a, 15b der Unterstützungsschlitten 14a, 14b jeweils ein Überdeckungselement 14a, 14b zur Abdeckung des Spaltes 6 zwischen den beiden Werkstückauflageflächen 4, 5 angebracht. Diese sind beispielsweise rolladenförmig ausgebildet und innerhalb des Spaltes 6 den Unterstützungsschlitten 14a, 14b folgend verfahrbar.

Zur Steuerung der schneidenden Bearbeitung weist die Bearbeitungsmaschine 1 eine Steuerungseinrichtung 16 auf, die zur Koordinierung der Bewegung des plattenförmigen Materials 2 des Schneidkopfes 9 sowie der Unterstützungsschlitten 14a, 14b dient, um eine gewünschte Werkstückposition X_{W}, eine gewünschte Schneidkopfposition X_{SY} und versetzt S_{Z} sowie eine gewünschte Position Y_{UA} und Y_{UB} der Unterstützungsschlitten 14a, 14b einzustellen, um das Schneiden einer vorgegebenen Schnittkontur 21 zu ermöglichen und das plattenförmige Material 2 ausreichend zu unterstützen. Die Steuerungseinrichtung 16 dient im gezeigten Beispiel auch zur Steuerung einer am Schneidkopf 9 seitlich befestigten Ausdrückeinrichtung 17, die in Form eines Ausdrückzylinders ausgebildet ist, dessen Kolbenstange als Ausdrückelement 18 zum Ausdrücken von freigeschnittenen Werkstückteilen 20 nach unten dient.

Das plattenförmige Werkstück 20 kann alternativ auch in einer Bearbeitungsmaschine 11 mit einer einzigen Werkstückauflage bearbeitet werden, auf der das plattenförmige Werkstück 2 bei der Bearbeitung ruht, während der Schneidkopf 9 in X- und Y-Richtung über die gesamte Werkstückauflage verfährt (Flying-optics-Maschine). In einer solchen Bearbeitungsmaschine ist die Werkstückauflage üblicherweise als Gitterrost-Auflage ausgebildet, bei der das plattenförmige Werkstück 2 auf den Spitzen der Auflagestege aufliegt. Zwischen den Auflagestegen sind Spalte gebildet, durch die Werkstückteile 20 nach unten fallen können.

In Figur 2 ist eine schematische Ansicht auf die Unterstützungsschlitten 14a, 14b und eine Schnittkontur 21 des Werkstückteils 20 dargestellt. Zum Freischneiden des Werkstückteils 20 wird der Schneidkopf 9 durch Bewegungseinrichtungen 11, 12, 13 verfahren, wobei korrespondierend zur Position des Schneidstrahls 3 die Unterstützungsschlitten 14a, 14b unter Aufrechterhaltung einer Spaltbreite A verfahren werden, sodass der Schneidstrahl 3 durch den Spalt A nach unten hindurchdringen kann. Die Breite des Spaltes A kann je nach der Schnittkontur 21 und/oder der Größe des Werkstückteils 20 verändert werden. Jedenfalls wird die Breite des Spaltes A kleingehalten, sodass das Werkstückteil 20 während dem Bearbeiten nicht selbständig nach unten ausgeschleust wird.

In Figur 3 ist eine schematische Seitenansicht des Schneidkopfes 9 beim Ausdrücken des freigeschnittenen Werkstückteils 20 nach dem vollständigen Freischneiden aus dem plattenförmigen Werkstück 2 dargestellt. Zum Ausdrücken des freigeschnittenen Werkstückteils 20 wird die Ausdrückeinrichtung 17 oberhalb des freigeschnittenen Werkstückteils 20 positioniert. Darauffolgend wird das Ausdrückelement 18 ausgefahren und die beiden Unterstützungsschlitten 14a, 14b aus der Werkstückauflageebene E nach unten abgesenkt, wie dies dargestellt ist. Sobald die Unterstützungsschlitten 14a, 14b ihre untere Endstellung erreicht haben, kann das Ausdrückelement 18 aus der unteren Position wiederum in eine Ausgangsposition zurückbewegt werden.

Zum Ausschleusen kann das freigetrennte Werkstückteil 20 unter der Werkstückauflageebene E in den Spalt 6 bewegt werden, beispielsweise indem der zweite Unterstützungsschlitten 14b in Y-Richtung verschoben wird, bis eine Ausschleusposition erreicht ist, in der das freigeschnittene Werkstückteil 20 nach unten ausgeschleust wird.

Alternativ kann zum Ausschleusen des freigeschnittenen Werkstückteils 20 die Breite des Spaltes A zwischen den beiden Unterstützungsschlitten 14a, 14b vergrößert werden, sodass die Auflageflächen 15a, 15b der Unterstützungsschlitten 14b, 14b das freigeschnittene Werkstückteil nicht mehr stützen. Dabei werden die Unterstützungsschlitten 14a, 14b in Abhängigkeit der Schnittkontur 21 des Werkstückteils 20 derart auseinander bewegt, dass eine vorzeitige Verkippung verhindert ist, bis das freigeschnittene Werkstückteil 20 frei von jeder Unterstützung der Auflageflächen 15a, 15b der Unterstützungsschlitten 14a, 14b ist. Dadurch kann das freigeschnittene Werkstückteil 20 als Entnahmeteil nach unten fallen und unterhalb der Werkstückauflageebene E ausgeschleust werden.

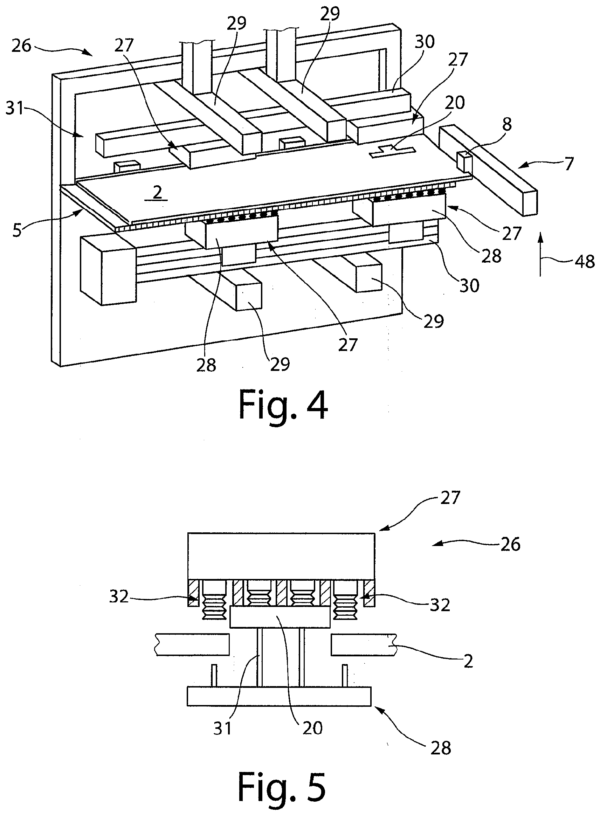

In Figur 4 ist alternativ zur Ausdrückeinrichtung 17 eine Aushebeeinrichtung 26 dargestellt, um das freigeschnittene Werkstückteil 20 aus dem plattenförmigen Material 2 bzw. einem aus dem plattenförmigen Material 2 nach dem Ausschneiden der Werkstückteile 20 gebildeten Restgitter 22 zu entnehmen. Diese Aushebeeinrichtung 26 umfasst oberhalb des plattenförmigen Materials 2 angeordnet zumindest eine Greifeinrichtung 27 sowie unterhalb des plattenförmigen Materials 2 zumindest ein Aushebemodul 28. Die zumindest eine Greifeinrichtung 27 und das zumindest eine Aushebemodul 28 sind entlang von Linearachsen 29, 30 zumindest in Y-Richtung und in Y-Richtung verfahrbar aufgenommen. Zur Entnahme eines freigeschnittenen plattenförmigen Werkstücks 20 wird das plattenförmige Material 2 mittels der Klemmeinrichtung 8 in Y-Richtung entlang der Werkstückauflageebene E verfahren. Die Greifeinrichtung 27 und das Aushebemodul 28 sind in Z-Richtung verfahrbar.

In Figur 5 ist eine schematische Ansicht eines Aushebestiftes mit der Aushebeeinrichtung 26 dargestellt, in welcher das freigeschnittene Werkstückteil 20 gegenüber dem plattenförmigen Material 2 durch Aushebestifte 31 des Aushebemoduls 28 gegenüber der Werkstückauflageebene E angehoben ist. Gleichzeitig kann das plattenförmige Material 2 während der Anhebebewegung durch die Greifeinrichtung 27 auf den Aushebestiften 31 gehalten werden. Nach dem Ausheben des Werkstückteils 20 kann das Werkstückteil 20 mit der Greifeinrichtung 27 entnommen werden. Bevorzugt werden Saugelemente 32 der Greifeinrichtung 27 aktiviert, sodass darauffolgend durch eine Verfahrbewegung der oberen Linearachsen 29 das freigeschnittene Werkstückteil 20 in eine Entladeposition übergeführt wird.

In Abhängigkeit der Größe und der Schnittkontur 21 des Werkstückteils 20 werden durch nicht näher dargestellte Kolbenzylindereinheiten die entsprechenden Aushebestifte 31 zum Ausheben des Werkstückteils 20 gegenüber dem plattenförmigen Material 2 im Aushebemodul 28 angesteuert.

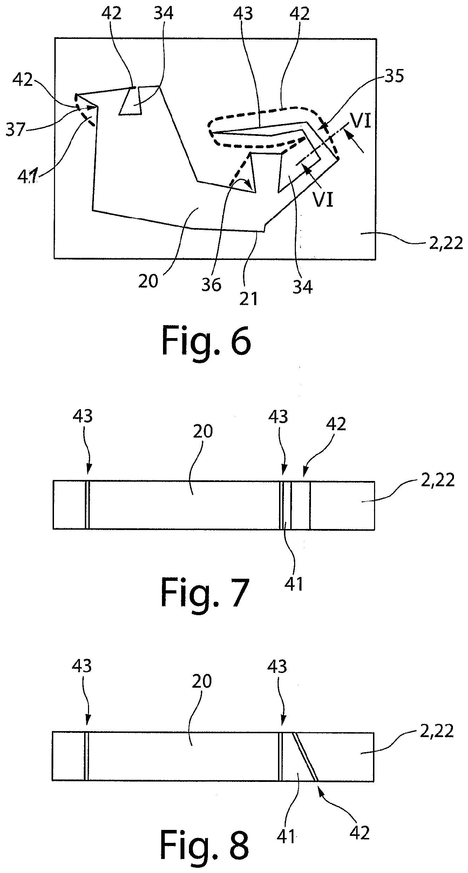

In Figur 6 ist eine Draufsicht auf ein plattenförmiges Material 2 mit einer beispielhaften Schnittkontur 21 des Werkstückteils 20 im umgebenden Restgitter 22 dargestellt. Die dünne durchgezogene Linie bildet die Schnittkontur 21 des Werkstückteils 20. Diese Schnittkontur 21 des Werkstückteils 20 weist beispielsweise mehrere komplexe Konturen 33 auf. Die komplexe Kontur 33 kann beispielsweise als eine Hinterschneidung 34 ausgebildet sein. Diese Hinterschneidung 34 kann beispielsweise in Form einer U-förmigen Geometrie ausgebildet sein. Des Weiteren kann ein hakenförmiger Bereich 35 die komplexe Kontur 33 bilden. Auch kann durch den hakenförmigen Bereich 35 eine Hinterschneidung 34 gebildet sein. Darüber hinaus kann die Schnittkontur 21 eine komplexe Kontur 33 in Form eines spitzen Winkels 36 umfassen. Auch kann beispielsweise die Schnittkontur 21 einen stumpfen Winkel 37 aufweisen. Die Anzahl und/oder Ausgestaltung der Hinterschneidungen 34, der hakenförmigen Bereiche 35, der spitzen Winkel 36 und/oder der stumpfen Winkel 37 kann einzeln und/oder in einer beliebigen Kombination miteinander vorgesehen sein. Durch einen einzelnen oder eine beliebige Kombination dieser Bereiche 34, 35, 36, 37 weist das Stückteil 20 eine Schnittkontur 21 mit einem oder mehreren komplexen Konturen 33 auf. Solche komplexen Konturen 33 der Schnittkontur 21 am Werkstückteil 20 neigen zu einem Verkanten und zu einer erschwerten Entnahme.

Zur Erhöhung der Prozesssicherheit werden solche Bereiche 34, 35, 36, 37 Opferteile 41 zugeordnet und geschnitten. Diese Opferteile 41 werden zwischen dem Werkstückteil 20 und dem Restgitter 22 gebildet. Die Opferteile weisen eine Schnittlinie 42 auf, welche strichliniert dargestellt ist, die sich zwischen dem Opferteil 41 und dem plattenförmigen Material 2 bzw. dem Restgitter 22 erstreckt. Des Weiteren wird das Opferteil 41 durch eine Schnittlinie 43 gebildet, welche beispielsweise als durchgezogene Linie dargestellt ist und sich zumindest teilweise entlang der Schnittkontur 21 des Werkstückteils 20 zwischen den beiden Enden der Schnittlinie 42 erstreckt.

Die das Opferteil 41 teilweise umgebene Schnittlinie 42 kann als eine Gerade ausgebildet sein, wie dies beispielsweise im Fall der Hinterschneidung 34 oder im Fall des spitzen Winkels 36 dargestellt ist. Diese Schnittlinie 42 des Opferteils 41 kann auch eine konvexe Hülle bilden, welche beispielsweise einen hakenförmigen Bereich 35 oder einen stumpfen Winkel 37 umgibt.

Durch das Einbringen des Opferteils 41 oder der Opferteile 41 werden zur Entnahme komplexe Konturen 33 entschärft, das heißt, dass das Werkstückteil 20, welches eine Schnittkontur 21 mit der zumindest einen komplexen Kontur 33 aufweist, zur Entnahme aus dem plattenförmigen Material 2 nach dem Entfernen des Opferteils 41 eine einfache Außenkontur umfasst.

Bei der Herstellung des Werkstückteils 20 mit der Schnittkontur 21 kann beispielsweise der Bereich 34 - also die Hinterschneidung - eingebracht und darauffolgend die Schnittlinie 42 eingebracht werden, sodass sich das in der Hinterschneidung 34 befindende Opferteil 31 gegenüber dem weiteren plattenförmigen Material 2 getrennt ist. Darauffolgend kann beispielsweise der stumpfe Winkel 37 geschnitten werden, wobei darauffolgend die Schnittlinie 42 für das Opferteil 41 eingebracht wird, welche dem stumpfen Winkel 37 zugeordnet ist. Diese Abfolge kann weiterhin für die weiteren Opferteile 41 erfolgen. Alternativ können auch zuerst nur die Schnittlinien 42 der Opferteile 41 eingebracht werden, um dann anschließend die Schnittlinie 43 für die Schnittkontur 21 des Werkstückteils 20 einzubringen. Die Abfolge und Reihenfolge können beliebig sein. Bevorzugt werden kurze aufeinanderfolgende Verfahrwege des Schneidkopfes 9 angesteuert, um aufeinanderfolgend die Schnittlinien 42, 41 zu bilden. Jedenfalls ist zwingend, dass vor dem vollständigen Freischneiden des Werkstückteils 20 aus dem plattenförmigen Material 2 das oder die Opferteile 41 bereits freigeschnitten sind.

Bei der in Figur 6 dargestellten Ausführungsform des Werkstückteils 20 kann durch die Anbringung der Opferteile 41 das Werkstückteil 20 nach einem der drei vorbeschriebenen Ausführungsformen aus dem plattenförmigen Material entnommen werden.

Figur 7 zeigt eine schematische Schnittansicht entlang der Linie VI-VI in Figur 6. Die Schnittlinie 43 für die Schnittkontur 21 des Werkstückteils 20 wird bevorzugt mit Schneidparametern angesteuert, um eine hohe Kantenqualität im Schneidspalt zu erzielen. Solche Schneidparameter können beispielsweise zur Verwendung von Stickstoff als Schneidgas, ein kleinerer Fokusdurchmesser, eine lineare Bewegung des Schneidstrahles oder dergleichen sein. In einem Bereich zwischen dem Opferteil 41 und dem plattenförmigen Material 2 kann die Schnittlinie 42 mit veränderten Schneidparametern gegenüber der Schnittlinie 43 angesteuert werden, da die Kantenqualität nicht relevant ist. Beispielsweise kann die Schnittlinie 42 als Breitschnitt ausgebildet werden, in der eine pendelnde Bewegung des Laserstrahls quer zum Schnittspalt geschnitten wird. Dies ermöglicht ein erleichtertes Herausfallen oder ein Ausdrücken oder Anheben des Opferteils 41 aus dem plattenförmigen Material 2 beziehungsweise Restgitter 22 aufgrund der vergrößerten Spaltbreite.

In Figur 8 ist eine alternative Ausführungsform zur Bildung der Schnittlinie 42 zwischen dem Opferteil 41 und dem plattenförmigen Material 2 beziehungsweise Restgitter 22 dargestellt. Bei dieser Ausführungsform kann die Schnittlinie 42 als ein Schrägschnitt ausgebildet sein, wodurch ein Herausfallen des Opferteils 41 nach unten aufgrund der Schnittgeometrie erleichtert wird. Dieser Schrägschnitt kann in der Breite des Schnittspaltes beliebig sein.

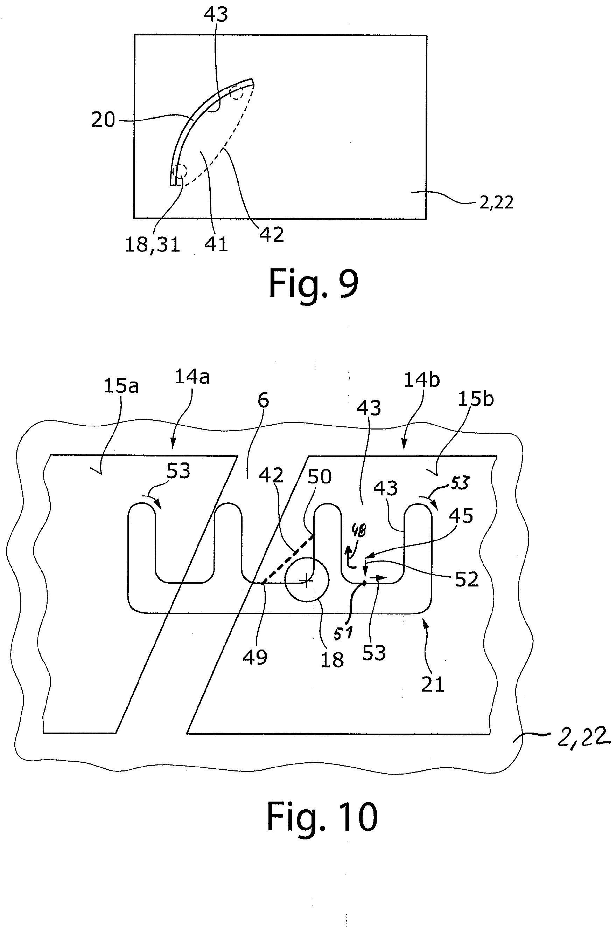

In Figur 9 ist eine schematische Ansicht auf das plattenförmige Material 2 mit einer alternativen Schnittkontur 21 des Werkstückteils 20 dargestellt. Bei dieser Schnittkontur 21 des Werkstückteils 20 ist beispielsweise die Breite des Werkstückteils 20 kleiner als ein Durchmesser von einem Ausdrückelement 18 oder Aushebestiften 31 ausgebildet. Um einen gesichertes Ausdrücken oder Ausheben des Werkstückteils 20 zu ermöglichen, wird ein Opferteil 41 ausgebildet, um im plattenförmigen Material 2 beziehungsweise Restgitter 22 nach dem Entfernen des Opferteils 41 einen hinreichenden Freiraum für das oder die Ausdrückelemente 18 oder das oder die Aushebestifte 21 zur Verfügung zu haben.

In Figur 10 ist eine weitere alternative Ausführungsform einer Schnittkontur 21 des Werkstückteils 20 dargestellt. Bei dieser Ausführungsform wird das Werkstückteil 20 durch ein Ausdrückelement 18 gemäß der in Figur 1 beschriebenen Ausdrückeinrichtung 17 durch den Spalt 6 nach unten ausgedrückt. Alternativ kann das Werkstückteil 20 auch nach oben ausgedrückt werden. Das Ausdrückelement 18 ist schematisch dargestellt. Der Durchmesser des Ausdrückelementes 18 ist größer als die flächige Erstreckung des Werkstückteils 20, an der das Ausdrückelement 18 angreift. Ein Teil des plattenförmigen Materials 2 steht einer Ausdrückeinrichtung des Ausdrückelementes entgegen. Durch das Opferteil 41, welches durch eine Schnittlinie 42 einerseits und einen Teil der Schnittlinie 43 der Schnittkontur 21 andererseits gebildet wird, kann dieser Freiraum erzielt werden.

Zum Herstellen und Freischneiden des Werkstückteils 20 und des Opferteils 41 wird beispielsweise folgende Schnittführung durch den Schneidkopf 9 angesteuert:
Die schematisch dargestellten Unterstützungsschlitten 14a, 14b werden während des Schneidprozesses derart bewegt, dass der Schneidstrahl 3 in den Spalt 6 eintreten kann. Zur Herstellung des Werkstückteils 2 wird beispielsweise ein Einstich am Punkt 45 vorgenommen. Darauffolgend wird der Schneidstrahl 3 auf die Schnittkontur 21 bis zum Punkt 51 zubewegt (Pfeil 52) und die Schnittlinie 43 (Pfeil 53) gebildet, bis beispielsweise die Position 49 erreicht ist. Darauffolgend wird die Schnittlinie 42 bis zur Position 50 eingebracht. Darauffolgend kann erneut der Schneidstrahl 3 zum Einstich 45 positioniert und anschließend in Richtung Pfeil 48 entlang der Schnittlinie 43 verfahren werden, bis die Position 49 erreicht ist. Bevorzugt wird der Bearbeitungskopf 9 von der Position 50 zur Position 49 versetzt und von dort aus der Schneidstrahl 3 entlang der Schnittlinie 43 weiter im Uhrzeigersinn verfahren, bis die Schnittlinie 43 den Punkt 51 erreicht hat.

Wesentlich ist bei der Schnittführung, die auf vielfältige Art und Weise erfolgen kann, dass vor dem vollständigen Freischneiden des Werkstückteils 20 das Opferteil 42 bereits freigeschnitten ist.

## Patentansprüche

1. Verfahren zum Schneiden und Entnehmen von zumindest einem Werkstückteil (20) mit einer komplexen Kontur oder mit einer unsymmetrischen Kontur aus einem plattenförmigen Material (2), insbesondere Blech,
- bei dem das zumindest eine Werkstückteil (20) mit einem auf das plattenförmige Material (2) gerichteten Schneidstrahl (3) geschnitten wird und das Werkstückteil (20) von dem plattenförmigen Material (2) getrennt wird,
- bei dem das zumindest eine Werkstückteil (20) als Entnahmeteil aus dem plattenförmigen Material (2), das als Restgitter (22) verbleibt, entnommen wird, wobei
- das freigeschnittene Werkstückteil (20) durch eine Aushebeeinrichtung (26) aus einer Werkstückauflageebene (E) des plattenförmigen Materials (2) angehoben wird, oder
- das freigeschnittene Werkstückteil (20) durch eine Ausdrückeinrichtung (17) aus einer Werkstückauflageebene (E) nach unten abgeführt wird, oder das freigeschnittene Werkstückteil (20) mittels Schwerkraft aus der Werkstückauflageebene (E) nach unten abgeführt wird,
**dadurch gekennzeichnet,**
- **dass** vor dem Freischneiden des Werkstückteils (20) zur Entnahme aus dem Restgitter (22) zumindest ein an das Werkstückteil (20) angrenzendes Opferteil (41) geschnitten wird, welches zwischen dem Werkstückteil (20) und dem Restgitter (22) gebildet wird und teilweise eine gemeinsame Schnittlinie (43) mit dem Werkstückteil (20) aufweist sowie eine Schnittlinie (42), die sich zwischen dem Opferteil (41) und dem Restgitter (22) erstreckt, und
- **dass** das zumindest eine Opferteil (41) aus dem plattenförmigen Material (2) freigeschnitten wird, bevor das Werkstückteil (20) in dem plattenförmigen Material (2) oder Restgitter (22) freigeschnitten wird,
- wobei das zumindest eine Opferteil (41) angrenzend an eine komplexe Kontur (33) des Werkstückteils (20) geschnitten wird, welche durch eine Hinterschneidung (34), einen hakenförmigen Bereich (35), einen spitzen Winkel (36) oder einen stumpfen Winkel (37) gebildet ist, und/oder wobei das zumindest eine Opferteil (41) so geschnitten wird, dass nach der Entnahme des Opferteils (41) ein ausreichend großer Freiraum im plattenförmigen Material (2) gebildet wird, der ein Angreifen zumindest eines Aushebestifts (31) oder Ausdrückelements (18) am Werkstückteil (20) ohne Kontakt des Aushebestifts (31) oder Ausdrückelements (18) mit dem Restgitter (22) ermöglicht.

2. Verfahren nach Anspruch 1, **dadurch gekennzeichnet, dass** das freigeschnittene Opferteil (41) aus dem plattenförmigen Material (2) entnommen und darauffolgend das Werkstückteil (20) freigeschnitten wird oder dass das freigeschnittene Opferteil (41) und das freigeschnittene Werkstückteil (20) gleichzeitig aus dem plattenförmigen Werkstückteil (2) entnommen werden.

3. Verfahren nach einem der Ansprüche 1 oder 2, **dadurch gekennzeichnet, dass** das der komplexen Kontur (33) des Werkstückteils (20) zugeordnete Opferteil (41) eine zum plattenförmigen Werkstück (2) weisende Schnittlinie (42) umfasst, die als eine Gerade oder eine konvexe Hülle ausgebildet wird.

4. Verfahren nach einem der vorhergehenden Ansprüche, **dadurch gekennzeichnet, dass** eine Schnittlinie (42) zwischen dem Opferteil (41) und dem plattenförmigen Material (2), die keine gemeinsame Schnittlinie (43) mit dem Werkstückteil (20) darstellt, mit einem vergrößerten Schneidspalt geschnitten wird.

5. Verfahren nach einem der Ansprüche 1 bis 3, **dadurch gekennzeichnet, dass** eine Schnittlinie (42) zwischen dem Opferteil (41) und dem plattenförmigen Material (2), die keine gemeinsame Schnittlinie (43) mit dem Werkstückteil (20) darstellt, mit einem Schrägschnitt geschnitten wird.

6. Bearbeitungsmaschine zum Schneiden und Entnehmen von zumindest einem Werkstückteil (20) mit einer komplexen Kontur oder mit einer unsymmetrischen Kontur aus einem plattenförmigen Material (2), insbesondere Blech,
- mit zwei Werkstückauflageflächen (4, 5), zwischen denen ein Spalt (6) gebildet ist,
- mit mindestens einem im Spalt (6) verfahrbaren Unterstützungsschlitten (14a, 14b), der mit mindestens einem Überdeckungselement (24) den Spalt zumindest teilweise abdeckt,
- mit zumindest einem Schneidkopf (9), durch welchen ein Schneidstrahl (3) zum Schneiden des Werkstückteils (20) auf das plattenförmige Material (2) gerichtet wird,
- mit einer Aushebeeinrichtung (26), welche eine Greifeinrichtung (27) und dieser gegenüberliegend zumindest ein Aushebemodul (28) mit Aushebestiften (31) umfasst, durch welche das freigeschnittene Werkstückteil (20) aus einer Werkstückauflageebene (E) senkrecht nach oben aushebbar ist, oder mit einer Ausdrückeinrichtung (17), welche zumindest ein Ausdrückelement (18) aufweist, um das freigeschnittene Werkstückteil (20) gegenüber einer Werkstückauflageebene (E) nach oben oder unten auszudrücken oder mit einer ansteuerbaren Größe des Spaltes (6) durch die Unterstützungsschlitten (14), sodass das freigeschnittene Werkstückteil (20) durch Schwerkraft aus der Werkstückauflageebene (E) durch den Spalt (6) nach unten herausfällt,
**dadurch gekennzeichnet,**
- **dass** die Bearbeitungsmaschine (1) eine Steuerungseinrichtung (16) aufweist, die zur Ansteuerung folgender Schritte ausgebildet ist:
- Schneiden des zumindest einen Werkstückteils (20) mit einem auf das plattenförmige Material (2) gerichteten Schneidstrahl (3) und Trennen des Werkstückteils (20) von dem plattenförmigen Material (2),
- Entnehmen des zumindest einen Werkstückteils (20) als Entnahmeteil aus dem plattenförmigen Material (2), das als Restgitter (22) verbleibt,
- Anheben des freigeschnittenen Werkstückteils (20) durch die Aushebeeinrichtung (26) aus der Werkstückauflageebene (E) des plattenförmigen Materials (2) oder Abführen nach unten des freigeschnittenen Werkstückteils (20) durch die Ausdrückeinrichtung (17) aus der Werkstückauflageebene (E), oder Abführen nach unten des freigeschnittenen Werkstückteils (20) mittels Schwerkraft aus der Werkstückauflageebene (E),
- Schneiden zumindest eines an das Werkstückteil (20) angrenzendes Opferteils (41), welches zwischen dem Werkstückteil (20) und dem Restgitter (22) gebildet wird und teilweise eine gemeinsame Schnittlinie (43) mit dem Werkstückteil (20) aufweist sowie eine Schnittlinie (42), die sich zwischen dem Opferteil (41) und dem Restgitter (22) erstreckt, vor dem Freischneiden des Werkstückteils (20) zur Entnahme aus dem Restgitter (22), wobei das zumindest eine Opferteil (41) angrenzend an eine komplexe Kontur (33) des Werkstückteils (20) geschnitten wird, welche durch eine Hinterschneidung (34), einen hakenförmigen Bereich (35), einen spitzen Winkel (36) oder einen stumpfen Winkel (37) gebildet ist, und/oder wobei das zumindest eine Opferteil (41) so geschnitten wird, dass nach der Entnahme des Opferteils (41) ein ausreichend großer Freiraum im plattenförmigen Material (2) gebildet wird, der ein Angreifen zumindest eines Aushebestifts (31) oder Ausdrückelements (18) am Werkstückteil (20) ohne Kontakt des Aushebestifts (31) oder Ausdrückelements (18) mit dem Restgitter (22) ermöglicht, und
- Freischneiden des zumindest einen Opferteils (41) aus dem plattenförmigen Material (2), bevor das Werkstückteil (20) in dem plattenförmigen Material (2) oder Restgitter (22) freigeschnitten wird.

## Claims

1. A method for cutting and removing at least one workpiece part (20) with a complex contour or with an asymmetrical contour from a plate-shaped material (2), in particular a metal sheet,
- in which the at least one workpiece part (20) is cut with a cutting jet (3) directed at the plate-shaped material (2) and the workpiece part (20) is separated from the plate-shaped material (2),
- in which the at least one workpiece part (20) is removed as a removal part from the plate-shaped material (2), which remains as a residual lattice (22), wherein
- the cut-free workpiece part (20) is raised from a workpiece support plane (E) of the plate-shaped material (2) by a lifting device (26), or
- the cut-free workpiece part (20) is discharged downwards out of a workpiece support plane (E) by an ejector device (17), or the cut-free workpiece part (20) is discharged downwards out of the workpiece support plane (E) by means of gravity,
**characterized in that**,
- before the workpiece part (20) is cut free for removal from the residual lattice (22), at least one sacrificial part (41) adjacent to the workpiece part (20) is cut, which is formed between the workpiece part (20) and the residual lattice (22) and partly has a common cutting line (43) with the workpiece part (20), and a cutting line (42) which extends between the sacrificial part (41) and the residual lattice (22), and
- at least one sacrificial part (41) is cut out of the plate-shaped material (2) before the workpiece part (20) is cut out of the plate-shaped material (2) or the residual lattice (22),
- wherein the at least one sacrificial part (41) is cut adjacent to a complex contour (33) of the workpiece part (20), which is formed by an undercut (34), a hook-shaped area (35), an acute angle (36) or an obtuse angle (37), and/or wherein the at least one sacrificial part (41) is cut such that after removal of the sacrificial part (41), a sufficiently large free space is formed in the plate-shaped material (2) which allows engagement of at least one lifting pin (31) or ejector element (18) on the workpiece part (20) without any contact between the lifting pin (31) or ejector element (18) and the residual lattice (22).

2. The method according to claim 1, **characterized in that** the cut-free sacrificial part (41) is removed from the plate-shaped material (2) and the workpiece part (20) is subsequently cut free or that the cut-free sacrificial part (41) and the cut-free workpiece part (20) are simultaneously removed from the plate-shaped workpiece (2) part.

3. The method according to one of Claims 1 or 2, **characterized in that** the sacrificial part (41) assigned to the complex contour (33) of the workpiece part (20) comprises a cutting line (42) pointing towards the plate-shaped workpiece (2), which is designed as a straight line or a convex envelope.

4. The method according to one of the preceding claims, **characterized in that** a cutting line (42) between the sacrificial part (41) and the plate-shaped material (2), which is not a common cutting line (43) with the workpiece part (20), is cut with an enlarged cutting gap.

5. The method according to one of Claims 1 to 3, **characterized in that** a cutting line (42) between the sacrificial part (41) and the plate-shaped material (2), which is not a common cutting line (43) with the workpiece part (20), is cut with a bevel cut.

6. A processing machine for cutting and removing at least one workpiece part (20) with a complex contour or with an asymmetrical contour from a plate-shaped material (2), in particular a metal sheet,
- with two workpiece supporting surfaces (4, 5) between which a gap (6) is formed,
- with at least one support carriage (14a, 14b) that can be moved in the gap (6) and that covers the gap at least partially with at least one covering element (24),
- with at least one cutting head (9), through which a cutting jet (3) is directed onto the plate-shaped material (2) to cut the workpiece part (20),
- with a lifting device (26) which comprises a gripper device (27) and, opposite the latter, at least one lifting module (28) with lifting pins (31), by means of which the cut-free workpiece part (20) can be raised vertically upwards out of a workpiece support plane (E), or with an ejector device (17) which has at least one ejector element (18) in order to push the cut-free workpiece part (20) up or down with respect to a workpiece support plane (E) or with a controllable size of the gap (6) by the supporting carriages (14), so that the cut-free workpiece part (20) falls downwards out of the workpiece support plane (E) through the gap (6) under the force of gravity,
**characterized in that**,
- the processing machine (1) has a control device (16) designed to control the following steps:
- cutting the at least one workpiece part (20) with a cutting jet (3) directed at the plate-shaped material (2) and separating the workpiece part (20) the plate-shaped material (2),
- removing the at least one workpiece part (20) as a removal part from the plate-shaped material (2), which remains as a residual lattice (22),
- raising the cut-free workpiece part (20) out of the workpiece support plane (E) of the plate-shaped material (2) by the lifting device (26) or downward removal of the cut-free workpiece part (20) out of the workpiece support plane (E) by the ejector device (17), or removal of the cut-free workpiece part (20) by means of gravity from the workpiece support plane (E),
- cutting at least one sacrificial part (41) adjacent to the workpiece part (20), which is formed between the workpiece part (20) and the residual lattice (22) and partially has a common cutting line (43) with the workpiece part (20) and a cutting line (42) that extends between the sacrificial part (41) and the residual lattice (22), before the workpiece part (20) is cut free for removal from the residual lattice (22), wherein the at least one sacrificial part (41) is cut adjacent to a complex contour (33) of the workpiece part (20), which is formed by an undercut (34), a hook-shaped area (35), an acute angle (36) or an obtuse angle (37), and/or wherein the at least one sacrificial part (41) is cut such that, after removal of the sacrificial part (41), a sufficiently large free space is formed in the plate-shaped material (2) which enables at least one lifting pin (31) or ejector element (18) to engage on the workpiece part (20) without the lifting pin (31) or ejector element (18) coming into contact with the residual lattice (22), and
- cutting at least one sacrificial part (41) out of the plate-shaped material (2) before the workpiece part (20) is cut out of the plate-shaped material (2) or the residual lattice (22).

## Revendications

1. Procédé de découpe et d'enlèvement d'au moins une pièce (20) à contour complexe ou à contour asymétrique dans un matériau en forme de plaque (2), en particulier dans une tôle,
- dans lequel ladite au moins une pièce (20) est découpée avec un faisceau de coupe (3) dirigé sur le matériau en forme de plaque (2) et la pièce (20) est séparée du matériau en forme de plaque (2),
- dans lequel ladite au moins une pièce (20) est enlevée comme pièce enlevée hors du matériau en forme de plaque (2), qui reste sous la forme d'une grille résiduelle (22), dans lequel
- la pièce (20) grugée est soulevée par un dispositif de levage (26) à partir d'un plan d'appui de pièce (E) du matériau en forme de plaque (2), ou
- la pièce (20) grugée est évacuée vers le bas d'un plan d'appui de pièce (E) par un dispositif d'éjection (17), ou la pièce (20) grugée est évacuée vers le bas du plan d'appui de pièce (E) par gravité,
**caractérisé en ce que**
- avant le grugeage de la pièce (20) pour son enlèvement hors de la grille résiduelle (22), au moins une pièce sacrificielle (41) adjacente à la pièce (20) est découpée, qui est formée entre la pièce (20) et la grille résiduelle (22) et présente partiellement une ligne de coupe commune (43) avec la pièce (20) ainsi qu'une ligne de coupe (42) s'étendant entre la pièce sacrificielle (41) et la grille résiduelle (22), et
- ladite au moins une pièce sacrificielle (41) est grugée dans le matériau en forme de plaque (2) avant que la pièce (20) ne soit grugée dans le matériau en forme de plaque (2) ou la grille résiduelle (22),
- ladite au moins une pièce sacrificielle (41) est découpée de manière adjacente à un contour complexe (33) de la pièce (20), qui est formé par une contre-dépouille (34), une zone en forme de crochet (35), un angle aigu (36) ou un angle obtus (37), et/ou dans lequel ladite au moins une pièce sacrificielle (41) est découpée de telle sorte qu'après l'enlèvement de la pièce sacrificielle (41), un espace libre suffisamment grand est formé dans le matériau en forme de plaque (2) pour permettre l'engagement d'au moins une broche de levage (31) ou un élément d'éjection (18) avec la pièce (20) sans contact entre la broche de levage (31) ou l'élément d'éjection (18) et la grille résiduelle (22).

2. Procédé selon la revendication 1, **caractérisé en ce que** la pièce sacrificielle (41) grugée est enlevée dans le matériau en forme de plaque (2), puis la pièce (20) est grugée dans la pièce en forme de plaque (2) ou la pièce sacrificielle (41) grugée et la pièce (20) grugée sont enlevées simultanément dans la pièce en forme de plaque (2).

3. Procédé selon l'une des revendications 1 ou 2, **caractérisé en ce que** la pièce sacrificielle (41) associée au contour complexe (33) de la pièce (20) comprend une ligne de coupe (42) pointant vers la pièce en forme de plaque (2), ladite ligne étant formée comme une ligne droite ou une enveloppe convexe.

4. Procédé selon l'une des revendications précédentes, **caractérisé en ce qu'**une ligne de coupe (42) entre la pièce sacrificielle (41) et le matériau en forme de plaque (2), qui ne représente pas une ligne de coupe commune (43) avec la pièce (20), est coupée avec un intervalle de coupe agrandi.

5. Procédé selon l'une des revendications 1 à 3, **caractérisé en ce qu'**une ligne de coupe (42) entre la pièce sacrificielle (41) et le matériau en forme de plaque (2), qui ne représente pas une ligne de coupe commune (43) avec la pièce (20), est découpée avec une coupe oblique.

6. Machine d'usinage pour découper et enlever au moins une pièce (20) à contour complexe ou à contour asymétrique dans un matériau en forme de plaque (2), en particulier dans une tôle,
- avec deux surfaces d'appui de pièce (4, 5) entre lesquelles est formé un intervalle (6),
- avec au moins un chariot de support (14a, 14b) déplaçable dans l'intervalle (6), qui recouvre au moins partiellement l'intervalle avec au moins un élément de recouvrement (24),
- avec au moins une tête de coupe (9), à travers laquelle un faisceau de coupe (3) pour découper la pièce (20) est dirigé sur le matériau en forme de plaque (2),
- avec un dispositif de levage (26) comprenant un dispositif de préhension (27) et, en regard de celui-ci, au moins un module de levage (28) avec des broches de levage (31) permettant de soulever verticalement la pièce (20) grugée depuis un plan d'appui de pièce (E), ou avec un dispositif d'éjection (17) comportant au moins un élément d'éjection (18) pour éjecter la pièce (20) grugée vers le haut ou vers le bas par rapport à un plan d'appui de pièce (E), ou avec une taille d'intervalle (6) réglable par les chariots de support (14), de sorte que la pièce (20) grugée tombe par gravité du plan d'appui de pièce (E) à travers l'intervalle (6),
**caractérisée en ce que**
- la machine d'usinage (1) comporte un dispositif de commande (16) qui est conçu pour commander les étapes suivantes :
- découpe d'au moins une pièce (20) avec un faisceau de coupe (3) dirigé sur le matériau en forme de plaque (2) et séparation de la pièce (20) du matériau en forme de plaque (2),
- enlèvement d'au moins une pièce (20) comme pièce enlevée du matériau en forme de plaque (2), qui reste sous la forme d'une grille résiduelle (22),
- levage de la pièce (20) grugée à l'aide du dispositif de levage (26) depuis le plan d'appui de pièce (E) du matériau en forme de plaque (2), ou évacuation vers le bas de la pièce (20) grugée à l'aide du dispositif d'éjection (17) depuis le plan d'appui de pièce (E), ou évacuation vers le bas de la pièce (20) grugée par gravité depuis le plan d'appui de pièce (E),
- découpe d'au moins une pièce sacrificielle (41) adjacente à la pièce (20), formée entre la pièce (20) et la grille résiduelle (22) et présentant partiellement une ligne de coupe commune (43) avec la pièce (20) ainsi qu'une ligne de coupe (42) qui s'étend entre la pièce sacrificielle (41) et la grille résiduelle (22), avant de gruger la pièce (20) pour l'enlever de la grille résiduelle (22), dans lequel ladite au moins une pièce sacrificielle (41) est découpée de manière adjacente à un contour complexe (33) de la pièce (20), formé par une contre-dépouille (34), une zone en forme de crochet (35), un angle aigu (36) ou un angle obtus (37), et/ou dans lequel ladite au moins une pièce sacrificielle (41) est découpée de telle sorte qu'après son enlèvement, un espace libre suffisamment grand soit formé dans le matériau en forme de plaque (2) pour permettre l'engagement d'au moins une broche de levage (31) ou un élément d'éjection (18) avec la pièce (20) sans contact de la broche de levage (31) ou de l'élément d'éjection (18) avec la grille résiduelle (22), et
- découpe de ladite au moins une pièce sacrificielle (41) hors du matériau en forme de plaque (2) avant que la pièce (20) ne soit grugée dans le matériau en forme de plaque (2) ou la grille résiduelle (22).
